# EUROPEAN PATENT SPECIFICATION

(11) **EP 4 338 448 B1**
(45) Date of publication and mention of the grant of the patent: **02.07.2025**
(21) Application number: 22724920.8
(22) Date of filing: 09.05.2022
(51) Int. Cl.: H04W 8/18, H04W 60/00

(54) **GENERIC FRAMEWORK FOR SUPPORT OF MULTIPLE PROFILES SUPPORT IN 5G**
GENERISCHER RAHMEN ZUR UNTERSTÜTZUNG VON MEHRFACHPROFILUNTERSTÜTZUNG IN 5G
STRUCTURE GÉNÉRIQUE DE PRISE EN CHARGE DE MULTIPLES PROFILS EN 5G

(30) Priority: 12.05.2021 US 202163187596 P
(43) Date of publication of application: 20.03.2024
(73) Proprietor: Telefonaktiebolaget LM Ericsson (publ), 164 83 Stockholm (SE)
(72) Inventor: FOTI, George, Dollard des Ormeaux, Québec H9G 2Z8 (CA)
(74) Representative: Ericsson
(86) International application number: PCT/IB2022/054296
(87) International publication number: WO 2022/238870

(56) References cited:
- ERICSSON: "KI#6 : Update to solution 40", vol. SA WG2, no. e-meeting; 20201116 - 20201120, 22 November 2020 (2020-11-22), XP051958006, Retrieved from the Internet <URL:https://ftp.3gpp.org/tsg_sa/WG2_Arch/TSGS2_142e_Electronic/INBOX/S2-2009437.zip S2-2009437.doc> [retrieved on 20201122]
- QUALCOMM ET AL: "KI#6 evaluation and conclusions", vol. SA WG2, no. e-meeting; 20201116 - 20201120, 20 November 2020 (2020-11-20), XP051956912, Retrieved from the Internet <URL:https://ftp.3gpp.org/tsg_sa/WG2_Arch/TSGS2_142e_Electronic/INBOX/S2-2009436.zip S2-2009436.docx> [retrieved on 20201120]

## Description

### FIELD

The present disclosure relates to wireless communications, and in particular, to wireless device initiated profile switching such as based on a profiled ID (PID) concept.

### BACKGROUND

The Third Generation Partnership Project (3GPP) has developed and is developing standards for Fourth Generation (4G) (also referred to as Long Term Evolution (LTE)) and Fifth Generation (5G) (also referred to as New Radio (NR)) wireless communication systems. Such systems provide, among other features, broadband communication between network nodes, such as base stations, and mobile wireless devices (WD), as well as communication between network nodes and between WDs.

In 3GPP, it has been described to isolate the usage of network slices by a wireless device where the wireless device is allocated different identities to use with sets of single-network slice selection assistance information, S-NSSAIs, S-NSSAIs, that may require isolation. For example, the wireless device may be allocated subscription permanent identifer1 (SUPI1)/generic public subscription identifier1 (GPSI1) for S-NSSAI1 and SUPI2/GPSI2 for S-NSSAI2 if S-NSSAI1 and S-NSSAI2 require isolation. The wireless device may have to register with the identity corresponding to the S-NSSAI that the wireless device wants to use. This helps ensure that the wireless device can never use the S-NSSAIs requiring isolation simultaneously.

To support the above, the wireless device is provisioned with a User Profile associated with a single subscription, but is also allocated an independent alias SUPI/ GPSI (s) for every set of S-NSSAIs that has be used independently. These additional alias SUPI(s), GPSIs and the compatible S-NSSAI(s) they are bound to can also be used to authenticate the wireless device if the S-NSSAI(s) require secondary authentication. Alias SUPIs have no subscription associated with them and are used for the purpose of slice switching between isolated sets using the registration procedure. Alias SUPIs are received at initial registration of the wireless device, in a registration accept response, and are considered configuration information by the wireless device. Further, in this multiple profiles concept a Unified Data Management (UDM) node is allowed to download multiple SUPIs where only one SUPI is associated with the subscription while, while the other SUPIs are considered as secondary SUPIs, or Alias SUPIs

Hence, there are constraints on simultaneous use of the network slice, e.g., the wireless device cannot use one set of slices simultaneous with another set of slices due to the "isolation" requirement.

Document "KI#6 : Update to solution 40", Ericsson, 3GPP draft S2-2009437 may be construed to disclose an update to solution #40 (separate SUPI/GPSI per isolated set of S-NSSAIs) for KI #6 (constraints on simultaneous use of the network slice). In this solution, the UE does not need to indicate its support to network for Associated-Identifiers since the solution uses existing Release 15 and 16 mechanisms for configured and Allowed S-NSSAI.

Document "KI#6 evaluation and conclusions", Qualcomm et al., 3GPP draft S2-2009436 may be construed to disclose an analysis of solutions for KI #6 and proposes conclusions. For instance, if the UE does not support the feature, the configured NSSAI the AMF sends only includes compatible slices, based on HPLMN decision (they are highlighted in subscription data as the compatible set to be provided in this case).

### SUMMARY

Some embodiments advantageously provide methods, systems, and apparatuses for profile switching at a wireless device such as based on a profile identifier (PID) concept.

The present disclosure is an extension of the multiple profiles concept which allows a UDM to download multiple SUPIs where only one SUPI is associated with the subscription. The other SUPIs may be considered secondary SUPIs, or Alias SUPIs. One or more embodiments described herein allows for a UE to use S-NSSAIs that cannot be used simultaneously according to, for example, the "isolation" requirement.

In one or more embodiments, a wireless device is allocated multiple profiles. Each profile may be identified with a PID.

Each PID is allocated any number of network slices for use, the network slices can be different, and some can be similar. Each network slice can be associated with different data networks, and other conditions in the profile.

Even if the same slice is used in different profiles, there can be different restrictions, and conditions as to what data network it can be used for per profile. UDM holds the relationships between PIDs, slices, and other relevant information to ensure that the proper profile is enforced.

The charging output includes the PID to ensure that profiles can be charged separately. The same applies for statistical information collected by the network.

Possible advantages for enabling multiple profiles for a subscriber are numerous. As an example, a subscriber may use his/her phone for work and for personal reasons were using configuring multiple profiles, as described herein, allows the subscriber to use separate profiles for different purposes, with separated charges per profile. More specifically, a subscriber may use the same phone, i.e., wireless device, but enable the following at different times: work related profile, personal related profile, profile for streaming, etc. The reasons for these different profiles can be due to any one of network slices with different purpose, cost related, network performance related, etc.

A phone or wireless device can also be shared by different users where the wireless device can also support multiple passwords for different users sharing the same devices so that the password can be a trigger for a profile switch.

In one or more embodiments, the UDM holds the information about the PIDs, and the corresponding profiles. The UDM enables an end user to switch between profiles through the use of the uplink (UL) NAS transport message and is now extended to enable the inclusion of a new information in the information element (IE) payload container, intended to the UDM, to enable the UDM to switch to a target profile. There may always be a default profile that will be the one used at initial wireless device registration.

Further, in one or more embodiments, at initial wireless device registration, the Access and Mobility Management Function (AMF) receives all PIDs from the UDM, as well as the subscribed S-NSSAIs bound to each PID. This enables the AMF to locate the Allowed S-NSSAI for each PID through interaction with Network Slice Selection Function, NSSF, and store them bound together.

The AMF returns to the wireless device at successful registration the Allowed S-NSSAIs for the current PID which is the default PID at initial wireless device registration. Additionally, the AMF returns to the wireless device all PIDs supported and the S-NSSAIs for each one.

The wireless device stores the PIDs bound to the subscribed S-NSSAIs. The Allowed S-NSSAIs for the PID associated with the default PID is also returned, and saved for the current PID.

For switching PIDs, the wireless device may determine to switch based at least on the selection of an application that requires an S-NSSAI bound to a different PID.

The wireless device proceeds to switch the target PID, through the use of an UL NAS transport message extended to request the UDM to switch to a new target PID.

The UDM notifies the AMF about a PID change. AMF may request the wireless device to re-register. AMF updates the Allowed S-NSSAI to match the target PID. The wireless device may be requested to perform mobility Registration if any S-NSSAI associated with the new PID requires secondary authentication.

Further, the wireless device may be configured with credentials required for secondary authentication for any S-NSSAI belonging to any PID. This will be enforced at Registration, or mobility registration associated with a new target PID.

Hence, one or more embodiments described herein advantageously enables one or more features with a low complexity solution. These one or more features extend wireless device capability using a low complexity framework.

According to the present disclosure, there are provided methods, a wireless device, an AMF node, a UDM node and a computer-readable medium according to the independent claims. Further developments are set forth in the dependent claims.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a schematic diagram of an example network architecture illustrating a communication system according to principles disclosed herein;
FIG. 2 is a block diagram of a network node in communication with a wireless device over a wireless connection and with a core node according to some embodiments of the present disclosure;
FIG. 3 is a flowchart of an example process in a wireless device according to some embodiments of the present disclosure;
FIG. 4 is a flowchart of an example process in a core node such as an AMF node according to some embodiments of the present disclosure;
FIG. 5 is a flowchart of an example process in a core node such as a UDM node according to some embodiments of the present disclosure;
FIG. 6 is a flowchart of another example process in a wireless device according to some embodiments of the present disclosure;
FIG. 7 is a flowchart of another example process in a core node such as an AMF node according to some embodiments of the present disclosure;
FIG. 8 is a flowchart of an example process in a core node such as a UDM node according to some embodiments of the present disclosure;
FIG. 9 is a diagram of a high level view of data held in different entities according to one or more embodiments of the present disclosure;
FIGS. 10A-10B are diagrams of a registration procedure according to one or more embodiments of the present disclosure; and
FIG. 11 is a signaling diagram for switching profiles according to one or more embodiments of the present disclosure.

### DETAILED DESCRIPTION

Before describing in detail example embodiments, it is noted that the embodiments reside primarily in combinations of apparatus components and processing steps related to wireless device initiated profile switching. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication. For example, in a scenario where a first device communicates a transmission to a second device, where such transmission is destined for a third device, the first device is "in communication with" both the second device and the third device. As another example, a first device may be in communication with a second device where such communication is transmitted (directly or indirectly) via one or more third devices (e.g., intermediate devices).

In some embodiments described herein, the term "coupled," "connected," and the like, may be used herein to indicate a connection, although not necessarily directly, and may include wired and/or wireless connections.

The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) such as a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

Transmitting in downlink may pertain to transmission from the network or network node to the wireless device. Transmitting in uplink may pertain to transmission from the wireless device to the network or network node. Transmitting in sidelink may pertain to (direct) transmission from one wireless device to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments are directed to configuration and implementation of wireless device initiated profile switching such as based on a PID concept.

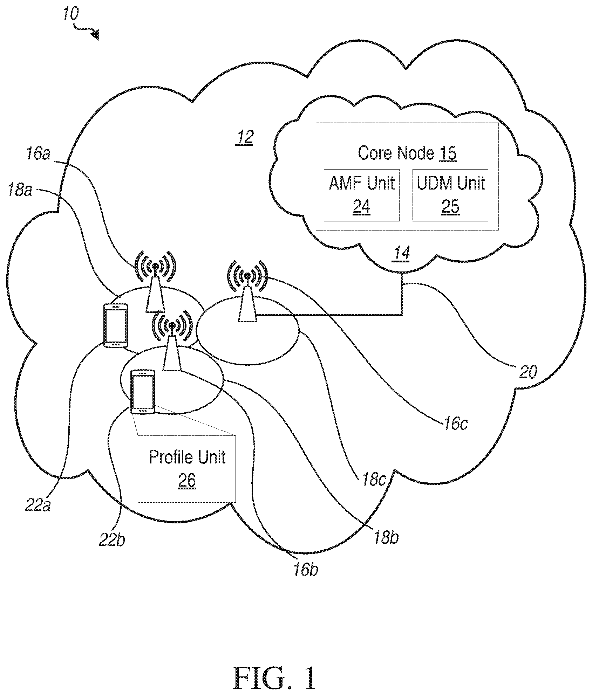

Referring to the drawing figures, in which like elements are referred to by like reference numerals, there is shown in FIG. 1 a schematic diagram of a communication system 10, according to an embodiment, such as a 3GPP-type cellular network that may support standards such as LTE and/or NR (5G), which comprises an access network 12, such as a radio access network, and a core network 14 including one or more core nodes 15 (collectively referred to as core node 15). The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second wireless device 22b in coverage area 18b is wirelessly connectable to the corresponding network node 16b. While a plurality of wireless devices 22a, 22b (collectively referred to as wireless devices 22) are illustrated in this example, the disclosed embodiments are equally applicable to a situation where a sole wireless device 22 is in the coverage area or where a sole wireless device 22 is connecting to the corresponding network node 16. Note that although only two wireless devices 22 and three network nodes 16 are shown for convenience, the communication system may include many more wireless devices 22 and network nodes 16.

Also, it is contemplated that a wireless device 22 can be in simultaneous communication and/or configured to separately communicate with more than one network node 16 and more than one type of network node 16. For example, a wireless device 22 can have dual connectivity with a network node 16 that supports LTE and the same or a different network node 16 that supports NR. As an example, wireless device 22 can be in communication with an eNB for LTE/E-UTRAN and a gNB for NR/NG-RAN.

Core node 15 may be configured to include an AMF unit 24 that is configured to perform one or more AMF functions as described herein such as with respect to profile switching. Core node 15 may be configured to include a UDM unit 25 that is configured to perform one or more UDM functions as described herein such as with respect to profile switching. A wireless device 22 may be configured to include a profile unit 26 which is configured to perform one or more wireless device 22 functions such as with respect to profile switching as described herein.

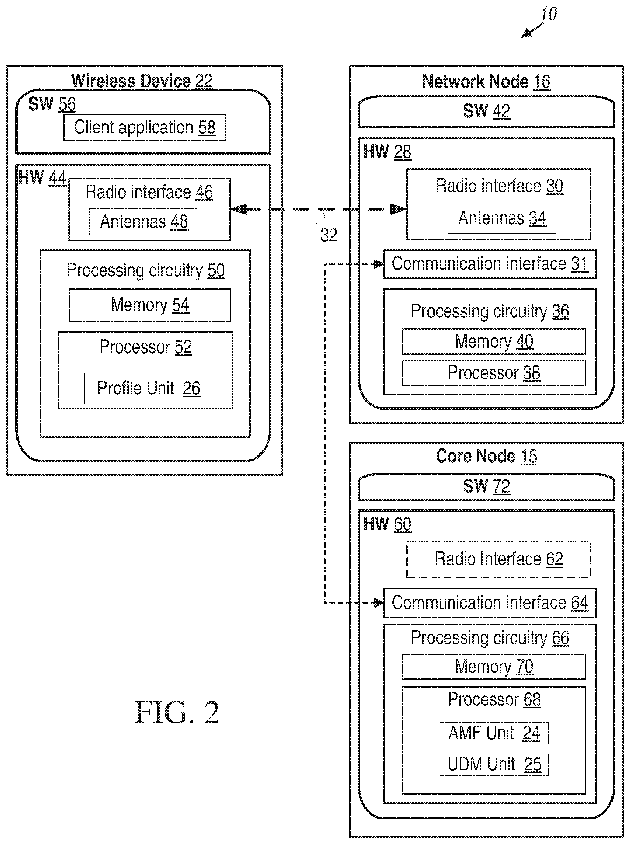

Example implementations, in accordance with an embodiment, of the wireless device 22, core node 15, and network node 16 discussed in the preceding paragraphs will now be described with reference to FIG. 2.

The communication system 10 includes a network node 16 provided in a communication system 10 and including hardware 28 enabling it to communicate with the wireless device 22 and core node 15. The hardware 28 may include a radio interface 30 for setting up and maintaining at least a wireless connection 32 with a wireless device 22 located in a coverage area 18 served by the network node 16. The radio interface 30 may be formed as or may include, for example, one or more RF transmitters, one or more RF receivers, and/or one or more RF transceivers. The radio interface 30 includes an array of antennas 34 to radiate and receive signal(s) carrying electromagnetic waves. Further, hardware 28 may include communication interface 31 for setting up communication with one or more core nodes 15.

In the embodiment shown, the hardware 28 of the network node 16 further includes processing circuitry 36. The processing circuitry 36 may include a processor 38 and a memory 40. In particular, in addition to or instead of a processor, such as a central processing unit, and memory, the processing circuitry 36 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 38 may be configured to access (e.g., write to and/or read from) the memory 40, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 42 stored internally in, for example, memory 40, or stored in external memory (e.g., database, storage array, network storage device, etc.) accessible by the network node 16 via an external connection. The software 42 may be executable by the processing circuitry 36. The processing circuitry 36 may be configured to control any of the methods and/or processes described herein and/or to cause such methods, and/or processes to be performed, e.g., by network node 16. Processor 38 corresponds to one or more processors 38 for performing network node 16 functions described herein. The memory 40 is configured to store data, programmatic software code and/or other information described herein. In some embodiments, the software 42 may include instructions that, when executed by the processor 38 and/or processing circuitry 36, causes the processor 38 and/or processing circuitry 36 to perform the processes described herein with respect to network node 16.

The communication system 10 further includes the wireless device 22 already referred to. The wireless device 22 may have hardware 44 that may include a radio interface 46 configured to set up and maintain a wireless connection 32 with a network node 16 serving a coverage area 18 in which the wireless device 22 is currently located. The radio interface 46 may be formed as or may include, for example, one or more RF transmitters, one or more RF receivers, and/or one or more RF transceivers. The radio interface 46 includes an array of antennas 48 to radiate and receive signal(s) carrying electromagnetic waves.

The hardware 44 of the wireless device 22 further includes processing circuitry 50. The processing circuitry 50 may include a processor 52 and memory 54. In particular, in addition to or instead of a processor, such as a central processing unit, and memory, the processing circuitry 50 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 52 may be configured to access (e.g., write to and/or read from) memory 54, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the wireless device 22 may further comprise software 56, which is stored in, for example, memory 54 at the wireless device 22, or stored in external memory (e.g., database, storage array, network storage device, etc.) accessible by the wireless device 22. The software 56 may be executable by the processing circuitry 50. The software 56 may include a client application 58. The client application 58 may be operable to provide a service to a human or non-human user via the wireless device 22.

The processing circuitry 50 may be configured to control any of the methods and/or processes described herein and/or to cause such methods, and/or processes to be performed, e.g., by wireless device 22. The processor 52 corresponds to one or more processors 52 for performing wireless device 22 functions described herein. The wireless device 22 includes memory 54 that is configured to store data, programmatic software code and/or other information described herein. In some embodiments, the software 56 and/or the client application 58 may include instructions that, when executed by the processor 52 and/or processing circuitry 50, causes the processor 52 and/or processing circuitry 50 to perform the processes described herein with respect to wireless device 22. For example, the processing circuitry 50 of the wireless device 22 may include profile unit 26 which is configured to perform one or more wireless device 22 functions such as with respect to profile switching as described herein.

The communication system 10 includes core node 15 that is configured to perform one or more core network functions, i.e., provide/function as one or more core network entities such as an AMF node 15, UDM node 15, etc. Core node 15 includes including hardware 60 enabling it to communicate with network node 16 and wireless device 22 such as via network node 16. The hardware 60 may optionally include a radio interface 62 for performing wireless communications. The radio interface 62 may be formed as or may include, for example, one or more RF transmitters, one or more RF receivers, and/or one or more RF transceivers. Further, hardware 60 may include communication interface 64 for setting up communication with one or more core nodes 15.

In the embodiment shown, the hardware 60 of the core node 15 further includes processing circuitry 66. The processing circuitry 66 may include a processor 68 and a memory 70. In particular, in addition to or instead of a processor, such as a central processing unit, and memory, the processing circuitry 66 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 68 may be configured to access (e.g., write to and/or read from) the memory 70, which may comprise any kind of volatile and/or non-volatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 72 stored internally in, for example, memory 70, or stored in external memory (e.g., database, storage array, network storage device, etc.) accessible by the core node 15 via an external connection. The software 72 may be executable by the processing circuitry 66. The processing circuitry 66 may be configured to control any of the methods and/or processes described herein and/or to cause such methods, and/or processes to be performed, e.g., by core node 15. Processor 68 corresponds to one or more processors 68 for performing core node 15 functions described herein. The memory 70 is configured to store data, programmatic software code and/or other information described herein. In some embodiments, the software 72 may include instructions that, when executed by the processor 68 and/or processing circuitry 66, causes the processor 68 and/or processing circuitry 66 to perform the processes described herein with respect to core node 15. For example, processing circuitry 66 of core node 15 may include AMF unit 24 which is configured to perform one or more AMF functions such as with respect to wireless device initiated profile switching as described herein. That is, core node 15 may act as and/or provide an AMF entity (i.e., AMF node 15) if core node 15 has AMF unit 24. For example, processing circuitry 66 of core node 15 may include UDM unit 25 which is configured to perform one or more UDM functions such as with respect to wireless device initiated profile switching as described herein. In other words, core node 15 may act as and/or provide a UDM entity (i.e., UDM node 15) if core node 15 has UDM unit 25. Core node 15 may include both units 24 and 25 such that core node 15 provides both an AMF entity (i.e., AMF node 15) and UDM node 15. Core node 15 may include other core node entities such as SMF, etc. and corresponding software/hardware to perform respective functionality.

In some embodiments, the inner workings of the core node 15, network node 16, and wireless device 22 may be as shown in FIG. 2 and independently, the surrounding network topology may be that of FIG. 1.

The wireless connection 32 between the wireless device 22 and the network node 16 is in accordance with the teachings of the embodiments described throughout this disclosure. More precisely, the teachings of some of these embodiments may improve the data rate, latency, and/or power consumption and thereby provide benefits such as reduced user waiting time, relaxed restriction on file size, better responsiveness, extended battery lifetime, etc. In some embodiments, a measurement procedure may be provided for the purpose of monitoring data rate, latency and other factors on which the one or more embodiments improve.

Although FIGS. 1 and 2 show various "units" such as AMF unit 24, UDM unit 25 and profile unit 26 as being within a respective processor, it is contemplated that these units may be implemented such that a portion of the unit is stored in a corresponding memory within the processing circuitry. In other words, the units may be implemented in hardware or in a combination of hardware and software within the processing circuitry. Further, while AMF unit 24 and UDM unit 25 are illustrated as being in a same core node 15 in FIG. 2, respective core nodes 15 may implement respective core network functions such that a first core node 15 may be configured with AMF unit 24 while a second core node 15 may be configured with UDM unit 25.

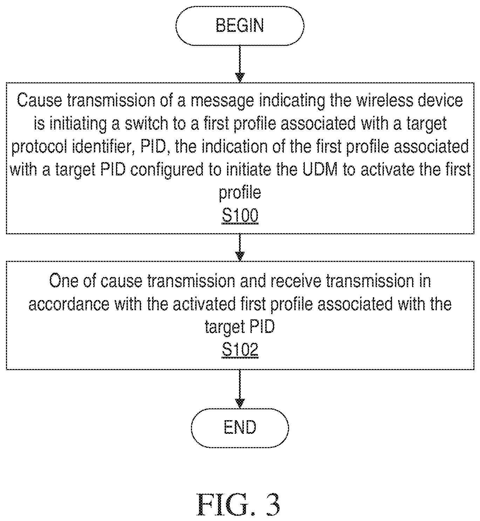

FIG. 3 is a flowchart of an example process in a wireless device 22 according to some embodiments of the present disclosure. One or more blocks described herein may be performed by one or more elements of wireless device 22 such as by one or more of processing circuitry 50 (including the profile unit 26), processor 52, and/or radio interface 46. Wireless device 22 is configured to cause (Block S100) transmission of a message indicating the wireless device 22 is initiating a switch to a first profile associated with a target profile identifier, PID, where the indication of the first profile associated with a target PID configured to initiate the UDM node 15 to activate the first profile, as described herein. Wireless device 22 is configured to one of cause transmission and receive transmission (Block S102) in accordance with the activated first profile associated with the target PID, as described herein.

According to one or more embodiments, the processing circuitry is further configured to: receive mobility registration signaling that is configured to cause the wireless device 22 to re-register with the AMF node 15 before using the first profile, and perform mobility registration with the AMF node 15 for profile switching, as described herein.

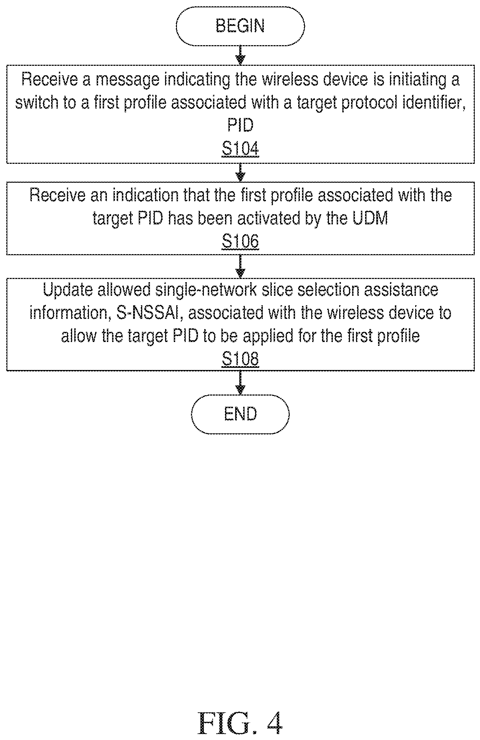

FIG. 4 is a flowchart of an example process in a AMF node 15 (i.e., a core node 15 that is performing one or more AMF functions) in accordance with one or more embodiments of the present disclosure. One or more blocks described herein may be performed by one or more elements of core node 15 such as by one or more of processing circuitry 66 (including the AMF unit 24), processor 68, and/or radio interface 62. Core node 15 (i.e., AMF node 15) is configured to receive (Block S104) a message indicating the wireless device 22 is initiating a switch to a first profile associated with a target profile identifier, PID, as described herein. Core node 15 is configured to receive (Block S106) an indication that the first profile associated with the target PID has been activated by the UDM node 15, as described herein. Core node 15 is configured to update (Block S108) allowed single-network slice selection assistance information, S-NSSAI, associated with the wireless device 22 to allow the target PID to be applied for the first profile, as described herein.

According to one or more embodiments, the processing circuitry 66 is further configured to store a plurality of profiles and a plurality of S-NSSAIs that are usable by the wireless device 22 for profile switching where the plurality of profiles includes the first profile, as described herein. According to one or more embodiments, the processing circuitry 66 is further configured to cause the wireless device 22 to perform mobility registration before the target PID is applied for the first profile, as described herein. According to one or more embodiments, the message indicates the wireless device 22 is initiating the switch to the first profile associated with the target PID is an uplink NAS transport message including the target PID.

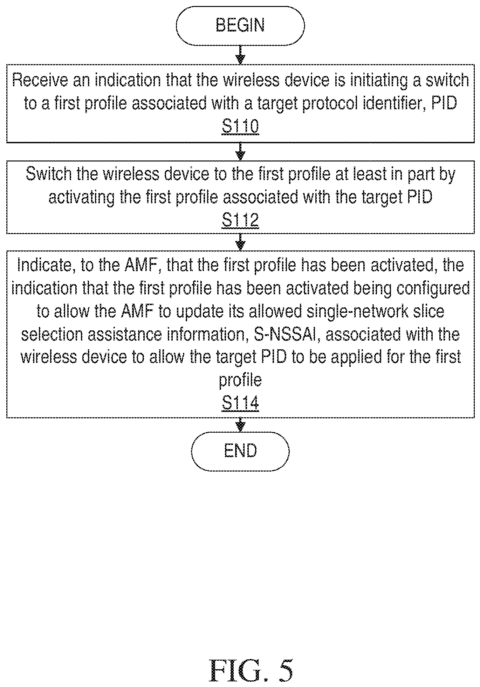

FIG. 5 is a flowchart of an example process in a core node 15 that is performing one or more UDM node 15 functions in accordance with one or more embodiments of the present disclosure. One or more blocks described herein may be performed by one or more elements of core node 15 such as by one or more of processing circuitry 66 (including the UDM unit 25), processor 68, and/or radio interface 62. Core node 15 (i.e., UDM node 15) is configured to receive (Block S110) an indication that the wireless device 22 is initiating a switch to a first profile associated with a target profile identifier, PID, as described herein. Core node 15 is configured to switch (Block S112) the wireless device 22 to the first profile at least in part by activating the first profile associated with the target PID, as described herein. Core node 15 is configured to indicate (Block S114), to the AMF node 15, that the first profile has been activated where the indication that the first profile has been activated is configured to allow the AMF node 15 to update its allowed single-network slice selection assistance information, S-NSSAI, associated with the wireless device 22 to allow the target PID to be applied for the first profile, as described herein.

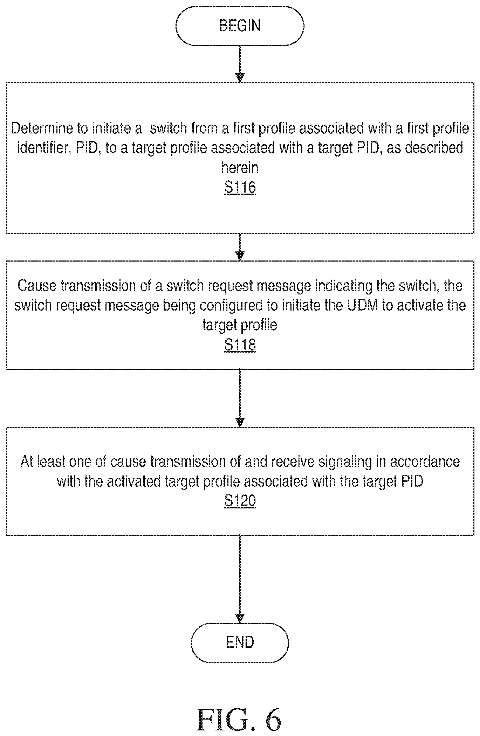

FIG. 6 is a flowchart of an example process in a wireless device 22 according to some embodiments of the present disclosure. One or more blocks described herein may be performed by one or more elements of wireless device 22 such as by one or more of processing circuitry 50 (including the profile unit 26), processor 52, and/or radio interface 46. Wireless device 22 is configured to determine (Block S116) to initiate a switch from a first profile associated with a first profile identifier, PID, to a target profile associated with a target PID, as described herein. Wireless device 22 is configured to cause transmission (Block S118) of a switch request message indicating the switch, the switch request message being configured to initiate the UDM node 15 to activate the target profile, as described herein. Wireless device 22 is configured to at least one of cause transmission of and receive (Block S120) signaling in accordance with the activated target profile associated with the target PID, as described herein.

According to one or more embodiments, the processing circuitry 50 is further configured to receive a mobility registration message, and to perform mobility registration based on the mobility registration message, where the mobility registration is configured to re-register with the AMF node 15 before using the target profile, as described herein.

According to one or more embodiments, the processing circuitry 50 is further configured to store a mapping of users of wireless devices 22 to PIDs, and to receive a login credential associated with a user of the wireless device 22, the determining the switch from the first profile to the target profile being based on the user being mapped to the target PID, as described herein.

According to one or more embodiments, the processing circuitry 50 is further configured to cause transmission of a registration request message to the AMF node 15. The processing circuitry 50 is further configured to, in response to the transmission of the registration request message, receive a registration accept message. The processing circuitry 50 is further configured to determine, based on the registration accept message, the first PID and an allowed first single-network slice selection assistance information, S-NSSAI, associated with the first PID. The processing circuitry 50 is further configured to at least one of cause transmission of and receive signaling in accordance with the allowed S-NSSAI, as described herein.

According to one or more embodiments, the determining of the first PID is based on the first PID being a default PID, as described herein.

According to one or more embodiments, the processing circuitry 50 is further configured to determine, based on the registration accept message, a plurality of supported PIDs, the plurality of supported PIDs including the first PID and the target PID, where the target PID is associated with a target S-NSSAI. The processing circuitry 50 is further configured to store the target PID and the target S-NSSAI, as described herein.

According to one or more embodiments, the determining of the switch from the first profile to the target profile is further based on at least one of: a financial cost associated with the target S-NSSAI, a network performance parameter associated with the target S-NSSAI, a time of day associated with the switch, and a user setting configured by a user of the wireless device 22, where the user setting is at least one of: a work setting, a personal setting, and a streaming setting.

According to one or more embodiments, the switch request message is an uplink NAS transport message including the target PID, as described herein

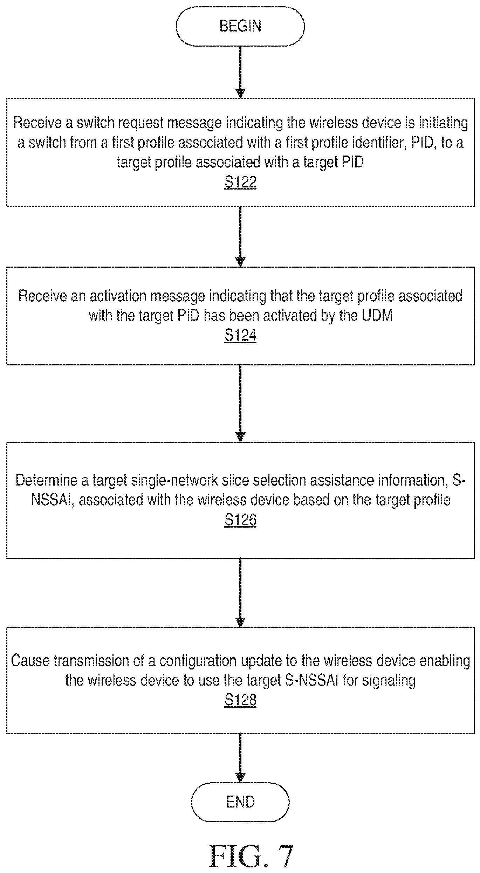

FIG. 7 is a flowchart of an example process in an AMF node 15 (i.e., a core node 15 that is performing one or more AMF functions) in accordance with one or more embodiments of the present disclosure. One or more blocks described herein may be performed by one or more elements of core node 15 such as by one or more of processing circuitry 66 (including the AMF unit 24), processor 68, and/or radio interface 62. AMF node 15 (i.e., core node 15) is configured to receive (Block S122) a switch request message indicating the wireless device 22 is initiating a switch from a first profile associated with a first profile identifier, PID, to a target profile associated with a target PID, as described herein. AMF node 15 (i.e., core node 15) is configured to receive (Block S124) an activation message indicating that the target profile associated with the target PID has been activated by the UDM node 15 (i.e., core node 15), as described herein. AMF node 15 (i.e., core node 15) is configured to determine (Block S126) a target single-network slice selection assistance information, S-NSSAI, associated with the wireless device 22 based on the target profile, as described herein. AMF node 15 (i.e., core node 15) is configured to cause transmission (Block S128) of a configuration update to the wireless device 22 enabling the wireless device 22 to use the target S-NSSAI for signaling, as described herein.

According to one or more embodiments, the processing circuitry 66 is further configured to cause the wireless device 22 to perform mobility registration before the target PID is applied for the target profile, as described herein.

According to one or more embodiments, the processing circuitry 66 is further configured to receive an indication indicating a plurality of PIDs and associated S-NSSAIs. The processing circuitry 66 is further configured to determine a default PID of the plurality of PIDs based on the indication. The processing circuitry 66 is further configured to determine an allowed S-NSSAI associated with the default PID. The processing circuitry 66 is further configured to receive a registration request message from the wireless device 22. The processing circuitry 66 is further configured to, in response to the receiving of the registration request message, cause transmission of a registration accept message to the wireless device 22, where the registration accept message indicates the default PID and the allowed S-NSSAI, as described herein.

According to one or more embodiments, the registration accept message further indicates the plurality of PIDs and associated S-NSSAIs, as described herein. According to one or more embodiments, the switch request message is an uplink NAS transport message including the target PID, as described herein. According to one or more embodiments, the first PID is associated with a first S-NSSAI, the first S-NSSAI is associated with a packet data unit, PDU, session, and the processing circuitry 66 being further configured to, in response to the receiving of the switch request message, deactivate the PDU session based on the first S-NSSAI not being associated with the target PID, as described herein. According to one or more embodiments, the receiving of the switch request message is based on a login credential associated with the target PID being received by the wireless device 22, as described herein. According to one or more embodiments, According to one or more embodiments of this aspect, the receiving of the switch request message is based on at least one of: a financial cost associated with the target S-NSSAI, a network performance parameter associated with the target S-NSSAI, a time of day associated with the switch, and a user setting configured by a user of the wireless device 22, where the user setting is at least one of: a work setting, a personal setting, and a streaming setting.. According to one or more embodiments, the first PID is a default PID, as described herein.

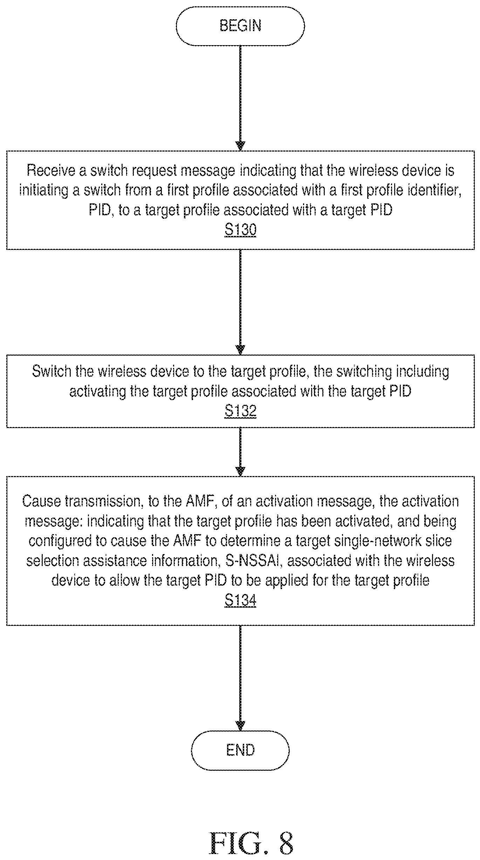

FIG. 8 is a flowchart of an example process in a UDM node (i.e., core node 15 that is performing one or more UDM functions) in accordance with one or more embodiments of the present disclosure. One or more blocks described herein may be performed by one or more elements of core node 15 such as by one or more of processing circuitry 66 (including the UDM unit 25), processor 68, and/or radio interface 62. UDM node 15 is configured to receive (Block S130) a switch request message indicating that the wireless device 22 is initiating a switch from a first profile associated with a first profile identifier, PID, to a target profile associated with a target PID, as described herein. UDM node 15 is configured to switch (Block S132) the wireless device 22 to the target profile, the switching including activating the target profile associated with the target PID, as described herein. UDM node 15 is configured to cause transmission (Block S134), to the AMF node 15, of an activation message, the activation message: indicating that the target profile has been activated, and being configured to cause the AMF node 15 to determine a target single-network slice selection assistance information, S-NSSAI, associated with the wireless device 22 to allow the target PID to be applied for the target profile, as described herein.

According to one or more embodiments, the receiving of the switch request message is based on a login credential associated with the target PID being received by the wireless device 22, as described herein. According to one or more embodiments, According to one or more embodiments of this aspect, the receiving of the switch request message is based on at least one of: a financial cost associated with the target S-NSSAI, a network performance parameter associated with the target S-NSSAI, a time of day associated with the switch, and a user setting configured by a user of the wireless device 22, where the user setting is at least one of: a work setting, a personal setting, and a streaming setting.. According to one or more embodiments, the first PID is a default PID, as described herein. According to one or more embodiments, the switch request message is an uplink NAS transport message including the target PID, as described herein.

Having described the general process flow of arrangements of the disclosure and having provided examples of hardware and software arrangements for implementing the processes and functions of the disclosure, the sections below provide details and examples of arrangements for profile switching such as wireless device 22 initiated profile switching.

Some embodiments provide wireless device initiated profile switching including configuration and implementation of the profile switching.

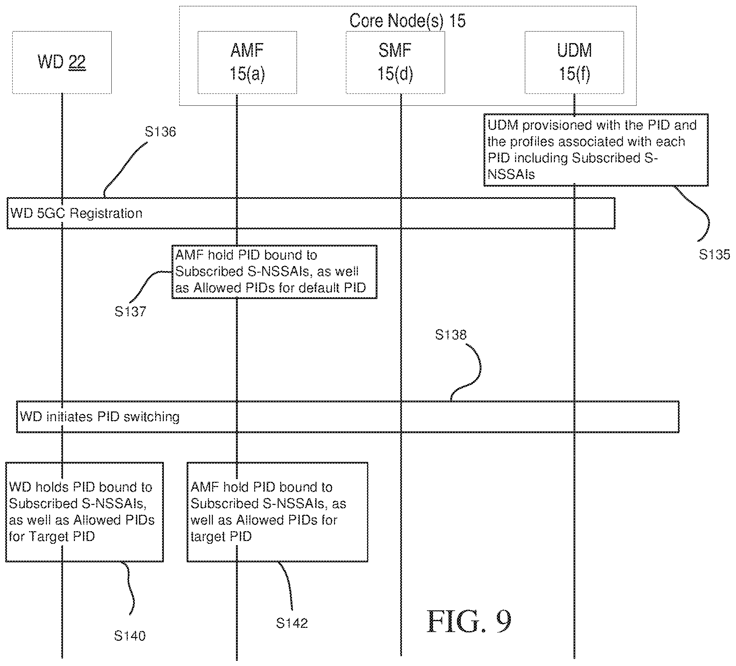

FIG. 9 is a high level diagram of data held in different entities according to one or more embodiments of the present disclosure, including wireless device 22 and one or more core nodes 15 including AMF node 15(a), SMF node 15(d), and UDM node 15(f), which may be co-located in a single core node 15 or distributed across multiple core nodes 15. In Step S135, the UDM node 15(f) is provisioned with the PID and the profiles associated with each PID including Subscribed S-NSSAIs. In Step S136, the wireless device 5GC registration is performed. In Step S137, the AMF node 15(a) holds PID(s) bound to Subscribed S-NSSAI(s), as well as Allowed PID(s)/S-NSSAIs for the default PID. In Step S138, the wireless device 22 initiates PID switching. In Step S140, the wireless device 22 holds PID(s) bound to Subscribed S-NSSAIs, as well as Allowed PID(s) for the Target PID. In Step S142, the AMF node 15(a) holds PID(s) bound to Subscribed S-NSSAIs, as well as Allowed PID(s) for the Target PID.

### Initial Registration with Default PID

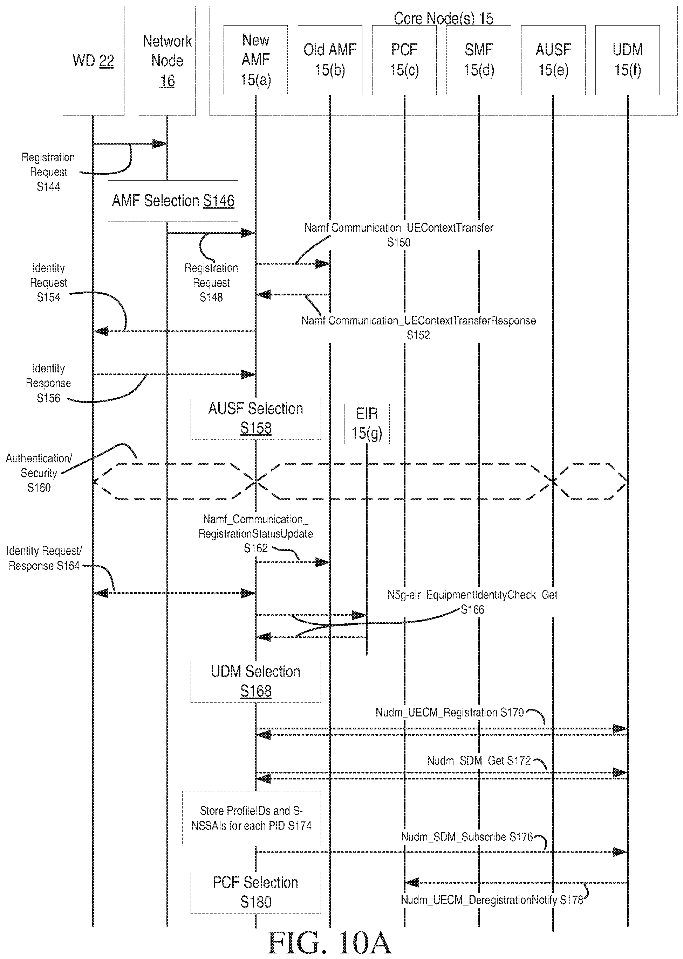

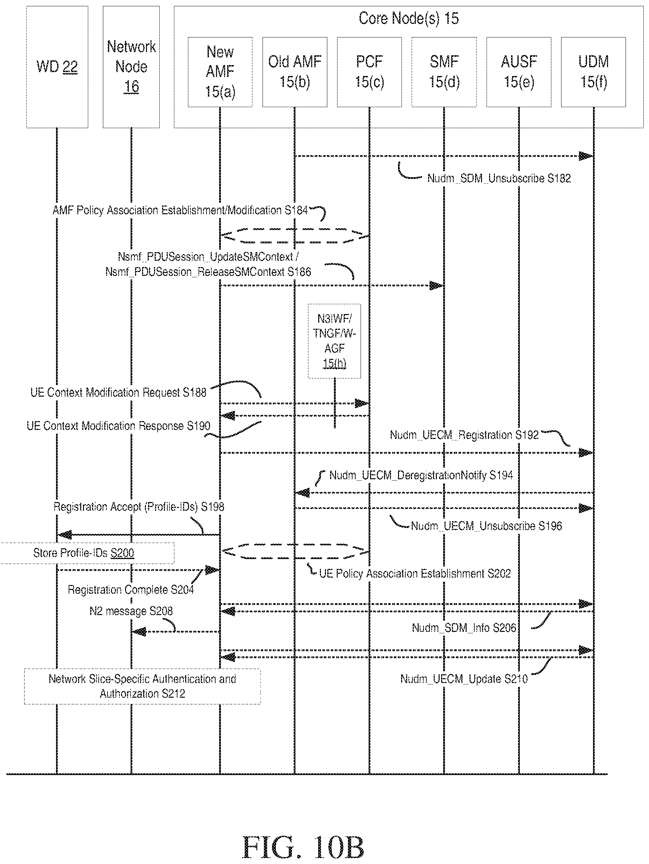

FIGS. 10A-10B are signaling diagrams of the call flow according to the typical registration for 3GPP Technical Report (TR) 23.502. Further, as used herein, one or more core nodes 15 may provide one or more of new AMF node 15(a), old AMF node 15(b), Policy Control Function (PCF) node 15(c), Session Management Function (SMF) node 15(d), Authentication Server Function (AUSF) node 15(e), UDM node 15(f), and Equipment Identity Register (EIR) node 15(g), illustrated in FIGS. 10A-10B. For example, one core node 15 may provide PCF node 15(c), SMF node 15(d), and UDM node 15(f), while another core node 15 may provide new AMF node 15(a) and old AMF node 15(b). In another example, core node 15 can be any one of the nodes illustrated within core node 15 in FIGS. 10A-10B, i.e., a new AMF node 15(a), an old AMF node 15(b), a UDM node 15(f), etc.

In Step S144, the wireless device 22 sends a registration request to the network node 16. In Step S146, the network node 16 performs AMF selection. In Step S148, the network node 16 sends a registration request to the New AMF node 15(a). In Step S150, the New AMF node 15(a) sends a Namf Communication_UEContextTransfer message to the Old AMF node 15(b). In Step S152, the Old AMF Node 15(b) sends a Namf Communication_UEContextTransferResponse message to the New AMF node 15(a). In Step S154, the New AMF node 15(a) transmits an Identity Request to the wireless device 22. In Step S156, the wireless device 22 sends an identity response to the New AMF node 15(a). In Step S158, the New AMF node 15(a) performs AUSF selection. In Step S160, the network performs authentication and security procedures. In Step S162, the New AMF node 15(a) sends a Namf_Communication_RegistrationStatusUpdate message to the EIR node 15(g). In Step S164, the wireless device 22 and New AMF node 15(a) exchange identity request/response message(s). In Step S166, the New AMF node 15(a) and the PCF node 15(c) exchange N5g-eir_EquipmentIdentityCheck_Get message(s). In Step S168, the New AMF node 15(a) performs UDM Selection. In Step S170, the New AMF node 15(a) and the UDM node 15(f) exchange Nudm_UECM_Registration message(s).

In Step 172, the New AMF node 15(a) and the UDM node 15(f) exchange Nudm_SDM_Get message(s). In Step S172, the UDM node 15(f) is configured with additional PIDs and associated data, e.g., via an Information element (IE), as an additional element in the Access and Mobility subscription related data. Each PID includes the subscribed S-NSSAI for that PID. One PID is considered default for the subscription and will be initially in effect. This is sent to the New AMF node 15(a) during the retrieval.

In Step 174, the New AMF node 15(a) stores ProfileIDs and S-NSSAIs for each PID. The New AMF node 15(a) then interacts with NSSF to fetch the Allowed S-NNSAI for all PIDs. They are stored and bounded to the PID. The New AMF node 15(a) may only return to wireless device 22 the Allowed S-NSSAI for the default PID at initial registration.

In Step S176, the New AMF node 15(a) sends a Nudm_SDM_Subscribe 176 message to the UDM node 15(f). In Step S178, the UDM node 15(f) sends a Nudm_UECM_DeregistrationNotify message to the PCF node 15(c). In Step S180, the New AMF node 15(a) performs PCF Selection. In Step S182, the Old AMF node 15(b) sends a Nudm_SDM_Unsubscribe message to the UDM node 15(f). In Step S184, the New AMF node 15(a), Old AMF node 15(b), and PCF node 15(c) perform AMF Policy Association Establishment/Modification. In Step S186, the New AMF node 15(a) transmits a Nsfm_PDUSession_UpdateSMContext/Nsfm_PDUSession_ReleaseSMContext message to the SMF node 15(d). In Step S188, the New AMF node 15(a) sends a UE Context Modification Request to the Non-3GPPP Inter-Working Function (N3IWF), Trusted Non-3GPP Gateway Function (TNGF), and/or Wireline Access Gateway Function (W-AGF) node 15(h), which may be part of one or more of core node(s) 15. In Step 190, the N3IWF/TNGF/W-AGF node 15(h) sends a UE Context Modification Response to the New AMF node 15(a). In Step S192, the New AMF node 15(a) sends a Nudm_UECM_Registration message to the UDM node 15(f). In Step S194, the UDM node 15(f) sends a Nudm_UECM_DeregistrationNotify message to the Old AMF node 15(b). In Step S196, the Old AMF node 15(b) sends a Nudm_UECM_Unsubscribe message to the UDM node 15(f).

In Step S198, the New AMF node 15(a) sends a Registration Accept (Profile-IDs) message to the wireless device 22, and/or the PIDS are returned to the wireless device 22. In some embodiments, the Allowed S-NSSAI may include only those S-NSSAI(s) which is/are associated with the default PID, since this is an initial Registration.

In Step S200, the wireless device 22 stores the PIDs. In Step S202, the New AMF node 15(a), Old AMF node 15(b), and/or PCF node 15(c) perform UE Policy Association Establishment. In Step S204, the wireless device 22 sends a Registration Complete message to the New AMF node 15(a). In Step S206, the New AMF node 15(a) and UDM node 15(f) exchange Nudm_SDM_Info. In Step S208, the New AMF node 15(a) sends an N2 Message to the network node 16. In Step S210, the New AMF node 15(a) and the UDM node 15(f) exchange Nudm_UECM_Update messages. In Step S212, the wireless device 22, network node 16, and/or New AMF node 15(a) perform Network Slice-Specific Authentication and Authorization procedures.

In some embodiments, the UDM node 15(f) may be pre-configured with PIDs and/or associated S-NSSAI(s).

PIDS may have a user friendly name and an ID that is used for protocol/profile purposes. The currently applicable PID may also be displayed to the end user.

### Switching Profiles

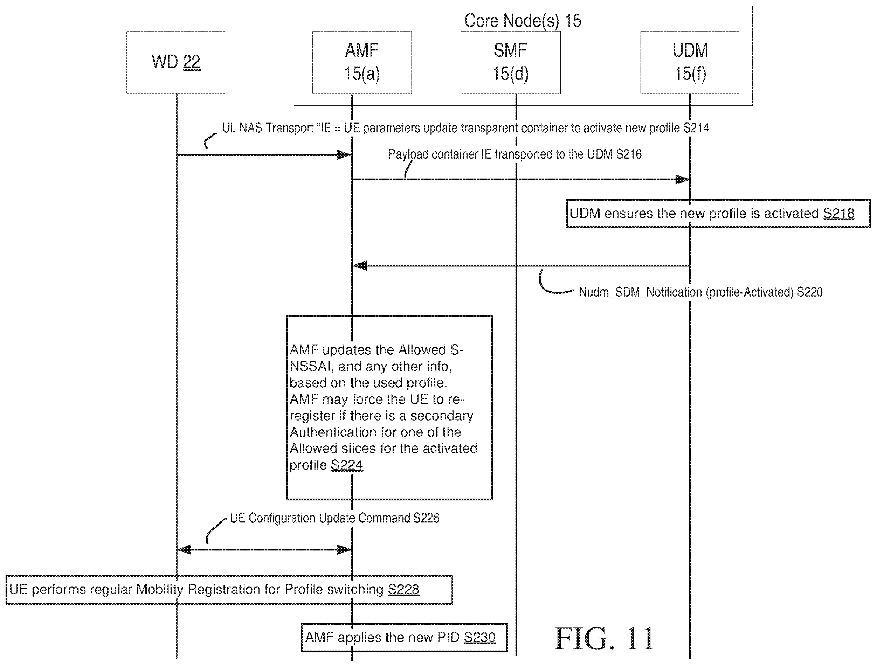

FIG. 11 is a signalling diagram of a call flow of how a user can initiate a profile switch to a different profile.

The steps in the call flow are described below:
In Step S214, wireless device 22 initiates a UL NAS transport message, sent to the AMF, to inform the UDM node 15(f) that the wireless device 22 wants to initiate a profile switch. The existing IE = wireless device parameters update transparent container to activate new profile is extended with a new capability for profile switching and includes the target PID that wireless device 22 wants to use. This is included in the Payload container IE sent to the UDM node 15(f).
In Step S216, the UDM node 15(f) receives the instruction from the AMF node 15(a).
In Step S218, the UDM node 15(f) validates the needed information and performs the profile switch.
In Step S220, the UDM node 15(f) informs the AMF node 15(a) about the PID that is being activated in an Nudm-SDM_Notification (Nudm Subscriber Data Management) message that is extended to include this information.
In Step S224, the AMF node 15(a) updates the Allowed information, e.g., S-NSSAI, and any other info, based on the used profile. The AMF node 15(a) may request that the wireless device 22 re-register if there is a secondary Authentication for one of the Allowed slices for the activated profile. The AMF node 15(a) sets up its internal state to associate an upcoming mobility registration with the target PID. The AMF node 15(a) informs the wireless device 22 and may request that it re-registers so the new PID takes effect. This command is extended to support the profile switching
In Step S226, the AMF node 15(a) exchanges configuration update(s) with the wireless device 22.
In step S228, wireless device 22 performs 5GC mobility registration to receive the new Allowed S-NSSAIs associated with the new PID. AMF node 15(a) knows that this mobility registration is associated with the target PID based at least on Step S224. The mobility registration itself is the same as an existing mobility registration except that there is a new trigger which is a profile switch.
In Step S230, the AMF node 15(a) applies the new PID.

While not shown in FIG. 11, in one or more embodiments, the AMF node 15(a) may, based on policies, tear down all PDU sessions associated with S-NSSAIs that belong to an old PID and not allowed with the new PID.

### Extensions to support shared device between multiple users

Wireless device 22 can be shared as well by different users and can also support multiple passwords for different users sharing the same wireless device(s) 22 so that the password can be trigger for a profile switch, for example. There may be other user based triggers to initiate or cause the profile switch that are in accordance with the teachings described herein.

Therefore, one or more embodiments described herein relate to a PID concept, profile identifier. The UDM node 15 defines multiple profiles for in a wireless device 22 subscription where each profile includes PID, corresponding NSSAI information, and other subscription information. All PIDs and corresponding NSSAIs are provided to AMF during first registration, and AMF provides the information to wireless device 22 as well. However, AMF may only indicate allowed NSSAI to wireless device 22 that is related to the default PID.

In case wireless device 22 wants to switch to another PID/NSSAI received in the previous registration, wireless device 22 sends the target PID to the network (i.e., core network 15 via network node 16) and the network applies the new profile and corresponding NSSAI.

Wireless device 22 sends the wanted/target PID to UDM node 15 by extending the current parameter "WD parameters update transparent container" and the UDM node 15 indicates the wanted PID to AMF. The AMF switches to the new profile and updates wireless device 22 with new allowed NSSAI associated with the new PID, via the UCU procedure. An indication is provided to the AMF to remove the PDU sessions related to the previous PID/NSSAI. For certain cases, the AMF may still need to request wireless device 22 to perform normal (initial or mobility) Registration Request.

In one or more embodiments, other alternatives for wireless device 22 to indicate the wanted PID to AMF with limited impact on NAS message may be used where these alternatives may avoid a round trip via UDM node 15 or may be make round trip to UDM node 15 optional.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Python, Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

## Claims

1. A method implemented in a wireless device (22) configured to communicate with an Access and Mobility Management Function, AMF, entity (15), and a Unified Data Management, UDM, node (15), the method comprising:
determining (S116) to initiate a switch from a first profile associated with a first profile identifier, PID, to a target profile associated with a target PID;
causing transmission (S118) of a switch request message indicating the switch, the switch request message being configured to initiate the UDM node (15) to activate the target profile; and
at least one of causing transmission of and receiving (S120) signaling in accordance with the activated target profile associated with the target PID.

2. The method of Claim 1, further comprising:
- receiving a mobility registration message; and performing mobility registration based on the mobility registration message, the mobility registration being configured to re-register with the AMF node (15) before using the target profile; and/or
- storing a mapping of users of the wireless device (22) to PIDs; and receiving a login credential associated with a user of the wireless device (22), the determining of the switch from the first profile to the target profile being based on the user being mapped to the target PID.

3. The method of any of Claim 1 or 2, further comprising:
causing transmission of a registration request message to the AMF node (15);
in response to the transmission of the registration request message, receiving a registration accept message;
determining, based on the registration accept message, the first PID and an allowed first single-network slice selection assistance information, S-NSSAI, associated with the first PID; and
at least one of causing transmission of and receiving signaling in accordance with the allowed S-NSSAI,
wherein, optionally, the determining of the first PID is based on the first PID being a default PID.

4. The method of Claim 3, further comprising:
determining, based on the registration accept message, a plurality of supported PIDs, the plurality of supported PIDs including the first PID and the target PID, the target PID being associated with a target S-NSSAI; and
storing the target PID and the target S-NSSAI,
wherein, optionally, the determining of the switch from the first profile to the target profile is further based on at least one of:
a financial cost associated with the target S-NSSAI;
a network performance parameter associated with the target S-NSSAI;
a time of day associated with the switch; and
a user setting configured by a user of the wireless device (22), the user setting being at least one of: a work setting, a personal setting, and a streaming setting.

5. The method of any of Claims 1 to 4, wherein the switch request message is an uplink non-access-stratum, NAS, transport message including the target PID.

6. A wireless device (22) configured to communicate with an Access and Mobility Management Function, AMF, node (15), and a Unified Data Management, UDM, node (15), the wireless device (22) comprising:
processing circuitry (50) configured to perform all steps of a method according to any one of claims 1 to 5.

7. A method implemented in an Access and Mobility Management Function, AMF, node (15) configured to communicate with a wireless device (22) and a Unified Data Management, UDM, node (15), the method comprising:
receiving (S122) a switch request message indicating the wireless device (22) is initiating a switch from a first profile associated with a first profile identifier, PID, to a target profile associated with a target PID;
receiving (S124) an activation message indicating that the target profile associated with the target PID has been activated by the UDM node (15);
determining (S126) a target single-network slice selection assistance information, S-NSSAI, associated with the wireless device (22) based on the target profile; and
causing (S128) transmission of a configuration update to the wireless device (22) enabling the wireless device (22) to use the target S-NSSAI for signaling.

8. The method of Claim 7, wherein:
- the method further comprises: causing the wireless device (22) to perform mobility registration before the target PID is applied for the target profile; and/or
- the method further comprises: receiving an indication indicating a plurality of PIDs and associated S-NSSAIs; determining a default PID of the plurality of PIDs based on the indication; determining an allowed S-NSSAI associated with the default PID; receiving a registration request message from the wireless device (22); and in response to the receiving of the registration request message, causing transmission of a registration accept message to the wireless device (22), the registration accept message indicating the default PID and the allowed S-NSSAI; and/or
- the registration accept message further indicates the plurality of PIDs and associated S-NSSAIs.

9. The method of Claim 7 or 8, wherein:
- the switch request message is an uplink non-access-stratum, NAS, transport message including the target PID; and/or
- the first PID is associated with a first S-NSSAI, the first S-NSSAI being associated with a packet data unit, PDU, session, the method further comprises in response to the receiving of the switch request message, deactivating the PDU session based on the first S-NSSAI not being associated with the target PID; and/or
- the receiving of the switch request message is based on a login credential associated with the target PID being received by the wireless device (22); and/or
- the receiving of the switch request message is based on at least one of: a financial cost associated with the target S-NSSAI; a network performance parameter associated with the target S-NSSAI; a time of day associated with the switch; and a user setting configured by a user of the wireless device (22), the user setting being at least one of: a work setting, a personal setting, and a streaming setting.

10. An Access and Mobility Management Function, AMF, node (15) configured to communicate with a wireless device (22) and a Unified Data Management, UDM, node (15), the AMF node (15) comprising:
processing circuitry (66) configured to perform all steps of a method according to any one of claims 7 to 9.

11. A method implemented in a Unified Data Management, UDM, node (15), configured to communicate with an Access and Mobility Management Function, AMF, node (15), and a wireless device (22), the method comprising:
receiving (S130) a switch request message indicating that the wireless device (22) is initiating a switch from a first profile associated with a first profile identifier, PID, to a target profile associated with a target PID;
switching (S132) the wireless device (22) to the target profile, the switching including activating the target profile associated with the target PID; and
causing (S134) transmission, to the AMF node (15), of an activation message, the activation message:
indicating that the target profile has been activated, and
being configured to cause the AMF node (15) to determine a target single-network slice selection assistance information, S-NSSAI, associated with the wireless device (22) to allow the target PID to be applied for the target profile.

12. The method of Claim 11, wherein:
- the receiving of the switch request message is based on a login credential associated with the target PID being received by the wireless device (22); and/or
- the receiving of the switch request message is based on at least one of: a financial cost associated with the target S-NSSAI; a network performance parameter associated with the target S-NSSAI; a time of day associated with the switch; and a user setting configured by a user of the wireless device (22), the user setting being at least one of: a work setting, a personal setting, and a streaming setting.

13. The method of Claim 11 or 12, wherein:
- the first PID is a default PID; and/or
- the switch request message is an uplink non-access-stratum, NAS, transport message including the target PID; and/or
- the method further comprises: storing a plurality of PIDs, each of the plurality of PIDs being associated with a respective S-NSSAI, the plurality of PIDs including a default PID, the default PID being associated with an allowed S-NSSAI; receiving an initial registration request message; in response to the receiving of the initial registration request message, causing transmission of an indication to the AMF node (15) indicating the plurality of PIDs and respective S-NSSAIs, the default PID, and the allowed S-NSSAI, for configuring the wireless device (22) to utilize the allowed S-NSSAI for the signaling.

14. A Unified Data Management, UDM, node (15), configured to communicate with an Access and Mobility Management Function, AMF, node (15), and a wireless device (22), the UDM node (15) comprising:
processing circuitry (66) configured to perform all steps of a method according to any one of claims 11 to 13.

15. A computer-readable medium (54, 70) comprising code portions which:
- when executed on a processor (52) of a wireless device (22), configure the processor to perform the steps of a method according to any one of claims 1 to 5; or
- when executed on a processor (68) of an Access and Mobility Management Function, AMF, node (15), configure the processor to perform the steps of a method according to any one of claims 7 to 9; or
- when executed on a processor (68) of a Unified Data Management, UDM, node (15), configure the processor to perform the steps of a method according to any one of claims 11 to 13.

## Patentansprüche

1. Verfahren, das in einer drahtlosen Vorrichtung (22) implementiert ist, das konfiguriert ist, um mit einer Zugriffs- und Mobilitätsverwaltungsfunktionseinheit, AMF-Einheit, (15) und einem Unified-Data-Managementknoten, UDM-Knoten, (15) zu kommunizieren, wobei das Verfahren umfasst:
Bestimmen (S116), eine Umschaltung von einem ersten Profil, das mit einer ersten Profilkennung, PID, verknüpft ist, zu einem Zielprofil, das mit einer Ziel-PID verknüpft ist, einzuleiten;
Veranlassen einer Übertragung (S118) einer Umschaltanforderungsnachricht, die die Umschaltung angibt, wobei die Umschaltanforderungsnachricht konfiguriert ist, um einzuleiten, dass der UDM-Knoten (15) das Zielprofil aktiviert; und
mindestens eines von einem Veranlassen der Übertragung und eines Empfangens (S120) einer Signalisierung gemäß dem aktivierten Zielprofil, das mit der Ziel-PID verknüpft ist.

2. Verfahren nach Anspruch 1, ferner umfassend:
- Empfangen einer Mobilitätsregistrierungsnachricht; und Durchführen einer Mobilitätsregistrierung basierend auf der Mobilitätsregistrierungsnachricht, wobei die Mobilitätsregistrierung konfiguriert ist, um sich vor Verwendung des Zielprofils erneut bei dem AMF-Knoten (15) zu registrieren; und/oder
- Speichern einer Zuordnung von Benutzern der drahtlosen Vorrichtung (22) zu PIDs; und Empfangen einer Anmeldeinformation, die mit einem Benutzer der drahtlosen Vorrichtung (22) verknüpft ist, wobei das Bestimmen der Umschaltung von dem ersten Profil zu dem Zielprofil darauf basiert, dass der Benutzer der Ziel-PID zugeordnet ist.

3. Verfahren nach einem der Ansprüche 1 oder 2, ferner umfassend:
Veranlassen der Übertragung einer Registrierungsanforderungsnachricht an den AMF-Knoten (15);
als Reaktion auf die Übertragung der Registrierungsanforderungsnachricht, Empfangen einer Registrierungsannahmenachricht;
Bestimmen, basierend auf der Registrierungsannahmenachricht, der ersten PID und einer zulässigen ersten Single Network Slice Selection Assistance Information, S-NSSAI, die mit der ersten PID verknüpft ist; und
mindestens eines des Veranlassens der Übertragung und/oder des Empfangens der Signalisierung gemäß der zulässigen S-NSSAI,
wobei optional das Bestimmen der ersten PID darauf basiert, dass die erste PID eine Standard-PID ist.

4. Verfahren nach Anspruch 3, ferner umfassend:
Bestimmen, basierend auf der Registrierungsannahmenachricht, einer Vielzahl von unterstützten PIDs, wobei die Vielzahl von unterstützten PIDs die erste PID und die Ziel-PID einschließt, wobei die Ziel-PID mit einer Ziel-S-NSSAI verknüpft ist; und
Speichern der Ziel-PID und der Ziel-S-NSSAI,
wobei optional das Bestimmen der Umschaltung von dem ersten Profil zu dem Zielprofil ferner auf mindestens einem basiert von:
finanziellen Kosten, die mit der Ziel-S-NSSAI verknüpft sind;
einem Netzwerkleistungsparameter, der mit der Ziel-S-NSSAI verknüpft ist;
einer Tageszeit, die mit der Umschaltung verknüpft ist; und
einer Benutzereinstellung, die durch einen Benutzer der drahtlosen Vorrichtung (22) konfiguriert ist, wobei die Benutzereinstellung mindestens eine ist von: einer Arbeitseinstellung, einer persönlichen Einstellung und einer Streaming-Einstellung.

5. Verfahren nach einem der Ansprüche 1 bis 4, wobei die Umschaltanforderungsnachricht eine Uplink-Non-Access-Stratum-Transportnachricht, NAS-Transportnachricht, ist, die die Ziel-PID einschließt.

6. Drahtlose Vorrichtung (22), die konfiguriert ist, um mit einem Zugriffs- und Mobilitätsverwaltungsfunktionsknoten, AMF-Knoten, (15) und einem Unified-Data-Managementknoten, UDM-Knoten, (15) zu kommunizieren, wobei die drahtlose Vorrichtung (22) umfasst:
Verarbeitungsschaltlogik (50), die konfiguriert ist, um alle Schritte eines Verfahrens nach einem der Ansprüche 1 bis 5 durchzuführen.

7. Verfahren, das in einem Zugriffs- und Mobilitätsverwaltungsfunktionsknoten, AMF-Knoten, (15) implementiert ist, der konfiguriert ist, um mit einer drahtlosen Vorrichtung (22) und einem Unified-Data-Managementknoten, UDM-Knoten, (15) zu kommunizieren, wobei das Verfahren umfasst:
Empfangen (S122) einer Umschaltanforderungsnachricht, die angibt, dass die drahtlose Vorrichtung (22) eine Umschaltung von einem ersten Profil, das mit einer ersten Profilkennung, PID, verknüpft ist, zu einem Zielprofil, das mit einer Ziel-PID verknüpft ist, einleitet;
Empfangen (S124) einer Aktivierungsnachricht, die angibt, dass das Zielprofil, das mit der Ziel-PID verknüpft ist, durch den UDM-Knoten (15) aktiviert wurde;
Bestimmen (S126) einer Ziel-Single-Network-Slice-Selection-Assistance-Information, S-NSSAI, die mit der drahtlosen Vorrichtung (22) verknüpft ist, basierend auf dem Zielprofil; und
Veranlassen (S128) der Übertragung einer Konfigurationsaktualisierung an die drahtlose Vorrichtung (22), wobei es der drahtlosen Vorrichtung (22) ermöglicht wird, die Ziel-S-NSSAI für die Signalisierung zu verwenden.

8. Verfahren nach Anspruch 7, wobei:
- das Verfahren ferner umfasst: Veranlassen der drahtlosen Vorrichtung (22), die Mobilitätsregistrierung durchzuführen, bevor die Ziel-PID für das Zielprofil angewendet wird; und/oder
- das Verfahren ferner umfasst: Empfangen einer Angabe, die eine Vielzahl von PIDs und verknüpften S-NSSAIs angibt; Bestimmen einer Standard-PID der Vielzahl von PIDs basierend auf der Angabe; Bestimmen einer zulässigen S-NSSAI, die mit der Standard-PID verknüpft ist; Empfangen einer Registrierungsanforderungsnachricht von der drahtlosen Vorrichtung (22); und als Reaktion auf das Empfangen der Registrierungsanforderungsnachricht, Veranlassen der Übertragung einer Registrierungsannahmenachricht an die drahtlose Vorrichtung (22), wobei die Registrierungsannahmenachricht die Standard-PID und die zulässige S-NSSAI angibt; und/oder
- die Registrierungsannahmenachricht ferner die Vielzahl von den PIDs und die verknüpften S-NSSAIs angibt.

9. Verfahren nach Anspruch 7 oder 8, wobei:
- die Umschaltanforderungsnachricht eine Uplink-Non-Access-Stratum-Transportnachricht, NAS-Transportnachricht, ist, die die Ziel-PID einschließt; und/oder
- die erste PID mit einer ersten S-NSSAI verknüpft ist, wobei die erste S-NSSAI mit einer Paketdateneinheitssitzung, PDU-Sitzung, verknüpft ist, wobei das Verfahren ferner als Reaktion auf das Empfangen der Umschaltanforderungsnachricht das Deaktivieren der PDU-Sitzung basierend darauf umfasst, dass die erste S-NSSAI nicht mit der Ziel-PID verknüpft ist; und/oder
- das Empfangen der Umschaltanforderungsnachricht auf einer Anmeldeinformation basiert, die mit der Ziel-PID verknüpft ist, die durch die drahtlose Vorrichtung (22) empfangen wird; und/oder
- das Empfangen der Umschaltanforderungsnachricht auf mindestens einem basiert von: finanziellen Kosten, die mit der Ziel-S-NSSAI verknüpft sind; einem Netzwerkleistungsparameter, der mit der Ziel-S-NSSAI verknüpft ist; einer Tageszeit, die mit der Umschaltung verknüpft ist; und eine Benutzereinstellung, die durch einen Benutzer der drahtlosen Vorrichtung (22) konfiguriert ist, wobei die Benutzereinstellung mindestens eines ist von: einer Arbeitseinstellung, einer persönlichen Einstellung und einer Streaming-Einstellung.

10. Zugriffs- und Mobilitätsverwaltungsfunktionsknoten, AMF-Knoten, (15), der konfiguriert ist, um mit einer drahtlosen Vorrichtung (22) und einem Unified-Data-Managementknoten, UDM-Knoten, (15) zu kommunizieren, wobei der AMF-Knoten (15) umfasst:
die Verarbeitungsschaltlogik (66), die konfiguriert ist, um alle Schritte eines Verfahrens nach einem der Ansprüche 7 bis 9 durchzuführen.

11. Verfahren, das in einem Unified-Data-Managementknoten, UDM-Knoten, (15) implementiert ist, der konfiguriert ist, um mit einem Zugriffs- und Mobilitätsverwaltungsfunktionsknoten, AMF-Knoten, (15) und einer drahtlosen Vorrichtung (22) zu kommunizieren, wobei das Verfahren umfasst:
Empfangen (S130) einer Umschaltanforderungsnachricht, die angibt, dass die drahtlose Vorrichtung (22) eine Umschaltung von einem ersten Profil, das mit einer ersten Profilkennung, PID, verknüpft ist, zu einem Zielprofil, das mit einer Ziel-PID verknüpft ist, einleitet;
Umschalten (S132) der drahtlosen Vorrichtung (22) zu dem Zielprofil, wobei das Umschalten das Aktivieren des Zielprofils umfasst, das mit der Ziel-PID verknüpft ist; und
Veranlassen (S134) der Übertragung, an den AMF-Knoten (15), einer Aktivierungsnachricht, wobei die Aktivierungsnachricht dient zum:
Angeben, dass das Zielprofil aktiviert wurde, und
Konfiguriertsein, um zu veranlassen, dass der AMF-Knoten (15) eine Ziel-Single-Network-Slice-Selection-Assistance-Information, S-NSSAI, die mit der drahtlosen Vorrichtung (22) verknüpft ist, bestimmt, um zu ermöglichen, dass die Ziel-PID für das Zielprofil angewendet wird.

12. Verfahren nach Anspruch 11, wobei:
- das Empfangen der Umschaltanforderungsnachricht auf einer Anmeldeinformation basiert, die mit der Ziel-PID verknüpft ist, die durch die drahtlose Vorrichtung (22) empfangen wird; und/oder
- das Empfangen der Umschaltanforderungsnachricht auf mindestens einem basiert von: finanziellen Kosten, die mit der Ziel-S-NSSAI verknüpft sind; einem Netzwerkleistungsparameter, der mit der Ziel-S-NSSAI verknüpft ist; einer Tageszeit, die mit der Umschaltung verknüpft ist; und eine Benutzereinstellung, die durch einen Benutzer der drahtlosen Vorrichtung (22) konfiguriert ist, wobei die Benutzereinstellung mindestens eines ist von: einer Arbeitseinstellung, einer persönlichen Einstellung und einer Streaming-Einstellung.

13. Verfahren nach Anspruch 11 oder 12, wobei:
- die erste PID eine Standard-PID ist; und/oder
- die Umschaltanforderungsnachricht eine Uplink-Non-Access-Stratum-Transportnachricht, NAS-Transportnachricht, ist, die die Ziel-PID einschließt; und/oder
- das Verfahren ferner umfasst: Speichern einer Vielzahl von PIDs, wobei jede der Vielzahl von PIDs mit einer jeweiligen S-NSSAI verknüpft ist, wobei die Vielzahl von PIDs eine Standard-PID einschließt, wobei die Standard-PID mit einer zulässigen S-NSSAI verknüpft ist; Empfangen einer anfänglichen Registrierungsanforderungsnachricht; und als Reaktion auf das Empfangen der anfänglichen Registrierungsanforderungsnachricht, Veranlassen der Übertragung einer Angabe an den AMF-Knoten (15), die die Vielzahl von PIDs und jeweiligen S-NSSAls, die Standard-PID und die zulässige S-NSSAI angibt, zum Konfigurieren der drahtlosen Vorrichtung (22), um die zulässige S-NSSAI für die Signalisierung zu verwenden.

14. Unified-Data-Managementknoten, UDM-Knoten, (15), der konfiguriert ist, um mit einem Zugriffs- und Mobilitätsverwaltungsfunktionsknoten, AMF-Knoten, (15) und einer drahtlosen Vorrichtung (22) zu kommunizieren, wobei der UDM-Knoten (15) umfasst:
Verarbeitungsschaltlogik (66), die konfiguriert ist, um alle Schritte eines Verfahrens nach einem der Ansprüche 11 bis 13 durchzuführen.

15. Computerlesbares Medium (54, 70), umfassend Codeabschnitte, die:
- wenn sie auf einem Prozessor (52) einer drahtlosen Vorrichtung (22) ausgeführt werden, den Prozessor konfigurieren, um die Schritte eines Verfahrens nach einem der Ansprüche 1 bis 5 durchzuführen; oder
- wenn sie auf einem Prozessor (68) eines Zugriffs- und Mobilitätsverwaltungsfunktionsknotens, AMF-Knotens, (15) ausgeführt werden, den Prozessor konfigurieren, um die Schritte eines Verfahrens nach einem der Ansprüche 7 bis 9 durchzuführen; oder
- wenn sie auf einem Prozessor (68) eines Unified-Data-Managementknotens, UDM-Knotens, (15) ausgeführt werden, den Prozessor konfigurieren, um die Schritte eines Verfahrens nach einem der Ansprüche 11 bis 13 durchzuführen.

## Revendications

1. Procédé implémenté dans un dispositif sans fil (22) configuré pour communiquer avec une entité de fonction de gestion d'accès et de mobilité, AMF (15), et un nœud de gestion unifiée de données, UDM (15), le procédé comprenant :
la détermination (S116) d'initier une commutation d'un premier profil associé à un premier identificateur de profil, PID, à un profil cible associé à un PID cible ;
le fait d'amener la transmission (S118) d'un message de demande de commutation indiquant la commutation, le message de demande de commutation étant configuré pour initier le nœud UDM (15) pour activer le profil cible ; et
au moins l'un parmi le fait d'amener la transmission et la réception (S120) d'une signalisation conformément au profil cible activé associé au PID cible.

2. Procédé selon la revendication 1, comprenant en outre :
- la réception d'un message d'enregistrement de mobilité ; et la mise en œuvre d'un enregistrement de mobilité en fonction du message d'enregistrement de mobilité, l'enregistrement de mobilité étant configuré pour se réenregistrer auprès du nœud AMF (15) avant utilisation du profil cible ; et/ou
- le stockage d'un mappage d'utilisateurs du dispositif sans fil (22) à des PID ; et la réception d'un identifiant de connexion associé à un utilisateur du dispositif sans fil (22), la détermination de la commutation du premier profil au profil cible étant en fonction de l'utilisateur étant mappé au PID cible.

3. Procédé selon l'une quelconque de la revendication 1 ou 2, comprenant en outre :
le fait d'amener la transmission d'un message de demande d'enregistrement au nœud AMF (15) ;
en réponse à la transmission du message de demande d'enregistrement, la réception d'un message d'acceptation d'enregistrement ;
la détermination, en fonction du message d'acceptation d'enregistrement, du premier PID et d'une première information d'assistance de sélection de tranche de réseau unique, S-NSSAI, autorisée associée au premier PID ; et
au moins l'un parmi le fait d'amener la transmission et la réception d'une signalisation conformément à la S-NSSAI autorisée,
dans lequel, facultativement, la détermination du premier PID est en fonction du premier PID étant un PID par défaut.

4. Procédé selon la revendication 3, comprenant en outre :
la détermination, en fonction du message d'acceptation d'enregistrement, d'une pluralité de PID pris en charge, la pluralité de PID pris en charge comportant le premier PID et le PID cible, le PID cible étant associé à une S-NSSAI cible ; et
le stockage du PID cible et de la S-NSSAI cible,
dans lequel, facultativement, la détermination de la commutation du premier profil au profil cible est en fonction en outre d'au moins l'un parmi :
un coût financier associé au S-NSSAI cible ;
un paramètre de performance de réseau associé au S-NSSAI cible ;
une heure de la journée associée à la commutation ; et
un réglage utilisateur configuré par un utilisateur du dispositif sans fil (22), le réglage utilisateur étant au moins l'un parmi : un réglage de travail, un réglage personnel et un réglage de diffusion en flux.

5. Procédé selon l'une quelconque des revendications 1 à 4, dans lequel le message de demande de commutation est un message de transport de strate de non-accès, NAS, en liaison montante comportant le PID cible.

6. Dispositif sans fil (22) configuré pour communiquer avec un nœud de fonction de gestion d'accès et de mobilité, AMF (15), et un nœud de gestion unifiée de données, UDM (15), le dispositif sans fil (22) comprenant :
un système de circuit de traitement (50) configuré pour mettre en œuvre toutes les étapes d'un procédé selon l'une quelconque des revendications 1 à 5.

7. Procédé implémenté dans un nœud de fonction de gestion d'accès et de mobilité, AMF (15) configuré pour communiquer avec un dispositif sans fil (22) et un nœud de gestion unifiée de données, UDM (15), le procédé comprenant :
la réception (S122) d'un message de demande de commutation indiquant que le dispositif sans fil (22) est en train d'initier une commutation d'un premier profil associé à un premier identificateur de profil, PID, vers un profil cible associé à un PID cible ;
la réception (S124) d'un message d'activation indiquant que le profil cible associé au PID cible a été activé par le nœud UDM (15) ;
la détermination (S126) d'une information d'assistance de sélection de tranche de réseau unique, S-NSSAI, cible associée au dispositif sans fil (22) en fonction du profil cible ; et
le fait d'amener (S128) la transmission d'une mise à jour de configuration au dispositif sans fil (22) permettant au dispositif sans fil (22) d'utiliser la S-NSSAI cible pour une signalisation.

8. Procédé selon la revendication 7, dans lequel :
- le procédé comprend en outre : le fait d'amener le dispositif sans fil (22) à mettre en œuvre un enregistrement de mobilité avant que le PID cible soit appliqué pour le profil cible ; et/ou
- le procédé comprend en outre : la réception d'une indication indiquant une pluralité de PID et de S-NSSAI associées ; la détermination d'un PID par défaut de la pluralité de PID en fonction de l'indication ; la détermination d'une S-NSSAI autorisée associée au PID par défaut ; la réception d'un message de demande d'enregistrement en provenance du dispositif sans fil (22) ; et en réponse à la réception du message de demande d'enregistrement, le fait d'amener la transmission d'un message d'acceptation d'enregistrement au dispositif sans fil (22), le message d'acceptation d'enregistrement indiquant le PID par défaut et la S-NSSAI autorisée ; et/ou
- le message d'acceptation d'enregistrement indique en outre la pluralité de PID et les S-NSSAI associées.

9. Procédé selon la revendication 7 ou 8, dans lequel :
- le message de demande de commutation est un message de transport de strate de non-accès, NAS, en liaison montante comportant le PID cible ; et/ou
- le premier PID est associé à une première S-NSSAI, la première S-NSSAI étant associée à une session d'unité de données de paquet, PDU, le procédé comprend en outre en réponse à la réception du message de demande de commutation, la désactivation de la session PDU en fonction de la première S-NSSAI n'étant pas associée au PID cible ; et/ou
- la réception du message de demande de commutation est en fonction d'un identifiant de connexion associé au PID cible étant reçu par le dispositif sans fil (22) ; et/ou
- la réception du message de demande de commutation est en fonction d'au moins l'un parmi : un coût financier associé à la S-NSSAI cible ; un paramètre de performance de réseau associé au S-NSSAI cible ; une heure de la journée associée à la commutation ; et un réglage utilisateur configuré par un utilisateur du dispositif sans fil (22), le réglage utilisateur étant au moins l'un parmi : un réglage de travail, un réglage personnel et un réglage de diffusion en flux.

10. Nœud de fonction de gestion d'accès et de mobilité, AMF (15) configuré pour communiquer avec un dispositif sans fil (22) et un nœud de gestion unifiée de données, UDM (15), le nœud AMF (15) comprenant :
un système de circuit de traitement (66) configuré pour mettre en œuvre toutes les étapes d'un procédé selon l'une quelconque des revendications 7 à 9.

11. Procédé implémenté dans un nœud de gestion unifiée de données, UDM (15), configuré pour communiquer avec un nœud de fonction de gestion d'accès et de mobilité, AMF (15), et un dispositif sans fil (22), le procédé comprenant :
la réception (S130) d'un message de demande de commutation indiquant que le dispositif sans fil (22) est en train d'initier une commutation d'un premier profil associé à un premier identificateur de profil, PID, vers un profil cible associé à un PID cible ;
la commutation (S132) du dispositif sans fil (22) vers le profil cible, la commutation comportant l'activation du profil cible associé au PID cible ; et
le fait d'amener (S134) la transmission, au nœud AMF (15), d'un message d'activation, le message d'activation :
indiquant que le profil cible a été activé, et
étant configuré pour amener le nœud AMF (15) à déterminer une information d'assistance de sélection de tranche de réseau unique, S-NSSAI, cible associée au dispositif sans fil (22) pour permettre au PID cible d'être appliqué pour le profil cible.

12. Procédé selon la revendication 11, dans lequel :
- la réception du message de demande de commutation est en fonction d'un identifiant de connexion associé au PID cible étant reçu par le dispositif sans fil (22) ; et/ou
- la réception du message de demande de commutation est en fonction d'au moins l'un parmi : un coût financier associé à la S-NSSAI cible ; un paramètre de performance de réseau associé au S-NSSAI cible ; une heure de la journée associée à la commutation ; et un réglage utilisateur configuré par un utilisateur du dispositif sans fil (22), le réglage utilisateur étant au moins l'un parmi : un réglage de travail, un réglage personnel et un réglage de diffusion en flux.

13. Procédé selon la revendication 11 ou 12, dans lequel :
- le premier PID est un PID par défaut ; et/ou
- le message de demande de commutation est un message de transport de strate de non-accès, NAS, en liaison montante comportant le PID cible ; et/ou
- le procédé comprend en outre : le stockage d'une pluralité de PID, chacun parmi la pluralité de PID étant associé à une S-NSSAI respective, la pluralité de PID comportant un PID par défaut, le PID par défaut étant associé à une S-NSSAI autorisée ; la réception d'un message de demande d'enregistrement initial ; en réponse à la réception du message de demande d'enregistrement initial, le fait d'amener la transmission d'une indication au nœud AMF (15) indiquant la pluralité de PID et des S-NSSAI respectives, le PID par défaut et la S-NSSAI autorisée, permettant de configurer le dispositif sans fil (22) pour utiliser la S-NSSAI autorisée pour la signalisation.

14. Nœud de gestion unifiée de données, UDM (15), configuré pour communiquer avec un nœud de fonction de gestion d'accès et de mobilité, AMF (15), et un dispositif sans fil (22), le nœud UDM (15) comprenant :
un système de circuit de traitement (66) configuré pour mettre en œuvre toutes les étapes d'un procédé selon l'une quelconque des revendications 11 à 13.

15. Support lisible par ordinateur (54, 70) comprenant des parties de code qui :
- lorsqu'elles sont exécutées sur un processeur (52) d'un dispositif sans fil (22), configurent le processeur pour mettre en œuvre les étapes d'un procédé selon l'une quelconque des revendications 1 à 5 ; ou
- lorsqu'elles sont exécutées sur un processeur (68) d'un nœud de fonction de gestion d'accès et de mobilité, AMF (15), configurent le processeur pour mettre en œuvre les étapes d'un procédé selon l'une quelconque des revendications 7 à 9 ; ou
- lorsqu'elles sont exécutées sur un processeur (68) d'un nœud de gestion unifiée de données, UDM (15), configurent le processeur pour mettre en œuvre les étapes d'un procédé selon l'une quelconque des revendications 11 à 13.
